# EUROPÄISCHE PATENTSCHRIFT

(11) **EP 2 567 133 B1**
(45) Veröffentlichungstag und Bekanntmachung des Hinweises auf die Patenterteilung: **31.12.2014**
(21) Anmeldenummer: 11718703.9
(22) Anmeldetag: 03.05.2011
(51) Int. Cl.: F16K 37/00

(54) **VERFAHREN ZUM ÜBERWACHEN EINER SCHNELLSCHLIESSENDEN MEHRFACH-ARMATUR UND EINE ZUGEHÖRIGE VORRICHTUNG**
Method for monitoring a quick-closing multiple fitting and accompanying device
Procédé de surveillance d'une armature multiple à fermeture rapide et dispositif correspondant

(30) Priorität: 03.05.2010 EP 10004650
(43) Veröffentlichungstag der Anmeldung: 13.03.2013
(73) Patentinhaber: Siemens Aktiengesellschaft, 80333 München (DE)
(72) Erfinder: BENNAUER, Martin, 46242 Bottrop (DE); HAVEMANN, Jürgen, 45479 Mülheim an der Ruhr (DE); SCHINDLER, Christoph, 45219 Essen (DE); ZIMMER, Gerta, 45468 Mülheim an der Ruhr (DE)
(86) Internationale Anmeldenummer: PCT/EP2011/056998
(87) Internationale Veröffentlichungsnummer: WO 2011/138299

(56) Entgegenhaltungen:
- FR-A1- 2 682 734
- US-A- 3 813 990
- US-A1- 2006 071 800

## Beschreibung

Die Erfindung betrifft ein Verfahren zum Überwachen einer schnellschließenden Mehrfach-Armatur bzw. einer Mehrfach-Armatur mit Stell- und Schnellschlussfunktion mit mehreren Ventilen, insbesondere eines Kernkraftwerks. Ferner betrifft die Erfindung eine Vorrichtung zum Überwachen einer derartigen schnellschließenden Mehrfach-Armatur; aus der US 3,813,990 wird ein solches Verfahren/Vorrichtung bekannt. Kernkraftwerke weisen im Reaktorgebäude Dampferzeuger auf, von denen aus Frischdampf durch vier Rohrleitungen zu einer Sattdampfturbine geführt wird. In den Rohrleitungen sind je ein Schnellschlussventil und ein Stellventil in Reihe geschaltet. Die Ventilkombinationen aus Schnellschlussventil und Stellventil regeln die Dampfzufuhr und unterbinden diese bei Bedarf. Dabei können die Schnellschlussventile in Kombination oder einzeln schließen. Der Schließvorgang führt zu einem Druckanstieg und einer Abbremsung des Massenstroms vor dem jeweiligen Ventil, der sich als Druckwelle mit Schallgeschwindigkeit in die zugehörige Rohrleitung ausbreitet. Die dabei entstehenden Kräfte sind erheblich. Wie groß die wirkenden Kräfte sind, hängt von der Länge der Druckwelle ab und auch von der Größe des abgesperrten Massenstroms. Vier Schnellschluss- und Stellventile eines Kernkraftwerks erlauben verschiedenste Schließvorgänge. Unter diesen Schließvorgängen stellt ein bei Teillast aufdriftendes Stellventil, dessen Massenstrom anschließend durch das Schnellschlussventil schlagartig abriegelt wird, die höchsten Anforderungen an die Auslegung derartiger Rohrleitungen.

Der derartige Störfall ist dann besonders relevant, weil bei Kernkraftwerken im Teillastbetrieb der Dampfdruck angehoben wird, um die mittlere Temperatur im Primärkreislauf konstant zu halten. Er beträgt dann ca. 90 bar. Es ergibt sich dann durch das aufdriftende Stellventil ein besonders hoher Massenstrom von bis zu 350% oder 400% eines Einzelstroms. So dass letztendlich, wie oben genannt, dieser besonders hohe Massenstrom mit dem letzten der vier Stellventile oder mit einem zugehörigen Schnellschlussventil abgeriegelt werden muss.

Der beschriebene Störfall muss bei der Auslegung der gesamten Anordnung aus Rohrleitungen und Ventilen berücksichtigt werden und kann damit hohe Kosten verursachen.

Es ist eine Aufgabe der Erfindung ein Verfahren und eine Vorrichtung zu schaffen, mit denen die oben genannten Nachteile überwunden sind und insgesamt eine kostengünstige sowie zugleich sichere Art zur Überwachung von schnellschließenden Mehrfach-Armaturen geschaffen ist.

Die Aufgabe ist mit einem Verfahren zum Überwachen einer schnellschließenden Mehrfach-Armatur mit mehreren Ventilen, insbesondere eines Kernkraftwerks, mit folgenden Schritten gelöst: Zuführen von Dampf zu der schnellschließenden Mehrfach-Armatur unter bestimmten Betriebszuständen, Verstellen mehrere Ventile der Mehrfach-Armatur in Abhängigkeit von Steuergrößen und Überwachen der Mehrfach-Armatur im Hinblick auf mögliche Störfälle, bei dem beim Überwachen der Mehrfach-Armatur auf mögliche Störfälle der Wert mindestens einer physikalischen Größe je Ventil ermittelt wird und die ermittelten Werte der physikalischen Größen auf Antivalenz überprüft werden.

Gemäß der Erfindung werden die Werte von je mindestens einer physikalischen Größe an den Ventilen von schnellschließenden Mehrfach-Armaturen miteinander verglichen. Falls ein Wert deutlich von den anderen Werten abweicht, wird eine Gegenmaßnahme eingeleitet. Das Vorgehen steht im Gegensatz zu einer Überwachung des jeweils einzelnen Ventils auf eine Werteabweichung. Erfindungsgemäß wird also nicht etwa geprüft, ob der Wert am einzelnen Ventil dem Erwartungswert gemäß einer Regelvorgabe entspricht, sondern die Ventile werden relativ zu einander betrachtet. Damit schließt die Erfindung auch den Fehlerfall aus, dass bereits die Regelvorgabe an einem der Ventile fehlerhaft sein könnte. Ferner werden die oben erläuterten Störfälle des Aufdriften eines einzelnen Ventils ohne jeglichen baulichen Mehraufwand erkannt.

Die erfindungsgemäße Lösung findet Anwendung bei Stellventilen von Kernkraftwerken. Eine begrenzte Antivalenz auf Grund einer definierten Öffnungsfolge wird bei der Überwachung berücksichtigt. Andere vorteilhafte Anwendungsgebiete der Erfindung können dort liegen, wo Mehrfach-Armaturen synchron geschlossen bzw. geöffnet werden müssen, um die sichere Funktion zu gewährleisten.

Bei einer ersten vorteilhaften Weiterbildung des erfindungsgemäßen Verfahrens erfolgt das Überprüfen auf Antivalenz während des Betriebszustands der Teillast und als Störfall wird ein Aufdriften oder ein Verbleiben in Offen-Stellung eines Ventils erkannt, während die restlichen Ventile zufahren oder in Geschlossen-Stellung verbleiben.

Erfindungsgemäß wird bereits ein Aufdriften eines einzelnen Ventils bei hohen Frischdampfdrücken (gerade im Teillastbetrieb) bei gleichzeitig geschlossenen restlichen Ventilen und damit großem Massenstrom sehr früh erkannt und gegebenenfalls verhindert. Wenn alle Ventile gleichmäßig öffnen, ergibt sich kein zu großer Massenstrom über den Ventilen. Die zulässigen Massenströme werden erst gar nicht überschritten.

Bei einer zweiten vorteilhaften Weiterbildung des erfindungsgemäßen Verfahrens erfolgt das Überprüfen auf Antivalenz während des Betriebszustands der Volllast und als Störfall wird ein Verbleiben in Offen-Stellung eines Ventils erkannt, während die restlichen Ventile im Schnellgang oder geregelt zufahren.

Die erfindungsgemäße Lösung erkennt auch den letztgenannten Störfall sicher und zuverlässig. Sie trägt damit zur weiteren Sicherheit auch während des Volllastbetriebs bei.

Bei einer dritten vorteilhaften Weiterbildung des erfindungsgemäßen Verfahrens wird beim Verstellen der Ventile mit diesen je ein Massenstrom in einer Rohrleitung eingestellt und das Ermitteln des Wertes einer physikalischen Größe umfasst ein Ermitteln des Massenstroms je Rohrleitung.

Der Massenstrom pro Rohrleitung wird bei bekannten Kernkraftwerken bereits jetzt oftmals gemessen und steht daher ohne Zusatzaufwand für die messtechnische Auswertung zur Verfügung. Erfindungsgemäß wird aus ihm auf eine Abweichung in der Stellung der Ventile einer schnellschließenden Mehrfach-Armatur rückgeschlossen und daraus werden dann Gegenmaßnahmen abgeleitet. Ein übermäßiger Massenstrom in einer einzelnen Rohrleitung kann so sicher bereits im Vorfeld verhindert werden.

Bei einer vierten vorteilhaften Weiterbildung des erfindungsgemäßen Verfahrens erfolgt das Ermitteln des Massenstroms je Rohrleitung durch ein Messen des Massenstroms in der zugehörigen Rohrleitung.

Wie bereits erwähnt kann eine solche Messung des Massenstroms oft kostenneutral zur Verfügung gestellt werden. Ferner bietet sie mit der zugehörigen erfindungsgemäßen Auswertung bereits ein hohes Maß an zusätzlicher Sicherheit.

Bei einer fünften vorteilhaften Weiterbildung des erfindungsgemäßen Verfahrens erfolgt das Ermitteln des Massenstroms je Rohrleitung durch ein Ermitteln des Ventilhubs des zugehörigen Ventils und ein nachfolgendes Umrechnen dieses Ventilhubs in einen resultierenden Massenstrom.

Erfindungsgemäße Untersuchungen haben gezeigt, dass eine höhere Reaktionsgeschwindigkeit erreicht werden kann, indem nicht der aus dem Ventilhub berechnete Massenstrom, sondern der Ventilhub bei der Überwachung gemäß der Erfindung beobachtet wird.

Bei einer sechsten vorteilhaften Weiterbildung des erfindungsgemäßen Verfahrens wird beim Verstellen der Ventile an diesen je ein Ventilhub eingestellt und das Ermitteln des Wertes der physikalischen Größe umfasst ein Messen des Ventilhubs je Ventil.

Durch Messungen der einzelnen Ventilhübe und einer gleichzeitigen Antivalenz- bzw. Contravalenzbetrachtung dieser Ventilhübe können bereits kleine Schwankungen sehr schnell erkannt und dazu genutzt werden, um gezielt eine Gegenmaßnahme einzuleiten oder diese eben gerade noch zurückzuhalten.

Bei einer siebten vorteilhaften Weiterbildung des erfindungsgemäßen Verfahrens wird ein Störfall erkannt, wenn beim Überprüfen der ermittelten Werte der physikalischen Größen auf Antivalenz eine Abweichung zwischen den Werten von mehr als 25% erkannt wird.

Eine optimale Abweichungsgrenze ist erfindungsgemäß ermittelt worden, um einerseits eine hohe Sicherheit und andererseits einen ausreichend stabilen Dauerbetrieb des zugehörigen Kraftwerks abbilden zu können. Als Abweichungsgrenze wird ein Wert ermittelt, der einerseits keine Fehlauslösung bedingt und andererseits ein Ansprechen bei kleinen Abweichungen ermöglicht.

Bei einer achten vorteilhaften Weiterbildung des erfindungsgemäßen Verfahrens wird bei Erkennung eines Störfalls ein Schnellgang des fehlerhaften Ventils, ein Teilschnellschluss des betreffenden Strangs oder ein vollständiger Trip einer nachgeordneten Turbine ausgelöst.

Durch eine derartige erfindungsgemäße Überwachung der Ventilhübe der Mehrfach-Armatur auf Antivalenz wird ein unzulässig großer Massenstrom durch ein einzelnes Ventil und ein damit unzulässiger Druckstoß verhindert. Gerade der Störfall "ein Stellventil driftet auf" muss bei der Auslegung von Stoßbremsen und Frischdampfleitungen nicht mehr berücksichtigt werden. Der Aufwand kann dadurch erheblich reduziert werden.

Die oben genannten Vorteile werden erfindungsgemäß auch mit einer Vorrichtung zum Überwachen einer schnellschließenden Mehrfach-Armatur mit mehreren Ventilen, insbesondere mit je einer Stellfunktion und einer Schnellschließfunktion, gelöst, bei der ein Mittel zum Zuführen von Dampf zu der schnellschließenden Mehrfach-Armatur unter bestimmten Betriebszuständen, ein Mittel zum Verstellen mehrere Ventile der Mehrfach-Armatur in Abhängigkeit von Steuergrößen und ein Mittel zum Überwachen der Mehrfach-Armatur im Hinblick auf mögliche Störfälle vorgesehen sind, wobei das Mittel zum Überwachen der Mehrfach-Armatur auf mögliche Störfälle dazu eingerichtet ist, den Wert mindestens einer physikalischen Größe je Ventil zu ermittelt und die ermittelten Werte der physikalischen Größen auf Antivalenz zu überprüfen.

Darüber hinaus sind bei der derartigen erfindungsgemäßen Vorrichtung die oben genannten verfahrenstechnischen Weiterbildungen bevorzugt in Gestalt von zugehörigen baulichen Einrichtungen bzw. Mitteln verwirklicht.

Nachfolgend wird ein Ausführungsbeispiel der erfindungsgemäßen Lösung anhand der beigefügten schematischen Zeichnungen näher erläutert. Es zeigt:
- Fig. 1: ein Schaudiagramm eines Teils eines Kernkraftwerks mit einer Mehrfach-Armatur und einer zugehörigen erfindungsgemäßen Vorrichtung,
- Fig. 2: eine detaillierte Darstellung der Mehrfach-Armatur gemäß Fig. 1,
- Fig. 3: drei Diagramme zur Veranschaulichung des zeitlichen Verlaufs von Drücken, von Ventilhüben und von Massenströmen an der Mehrfach-Armatur bei einem Störfall ohne Verwendung des erfindungsgemäßen Verfahrens,
- Fig. 4: eine Schaltung an der erfindungsgemäßen Vorrichtung zur Verwirklichung des erfindungsgemäßen Verfahrens und
- Fig. 5: drei Diagramme zur Veranschaulichung des zeitlichen Verlaufs von Drücken, von Ventilhüben und von Massenströmen an der Mehrfach-Armatur beim in Fig. 3 gezeigten Störfalls unter Verwendung des erfindungsgemäßen Verfahrens.

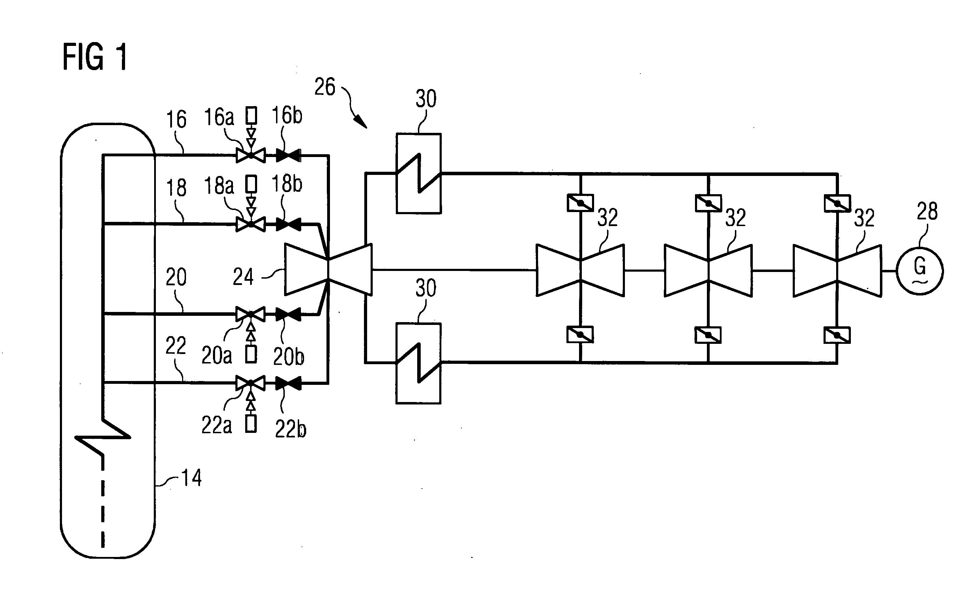

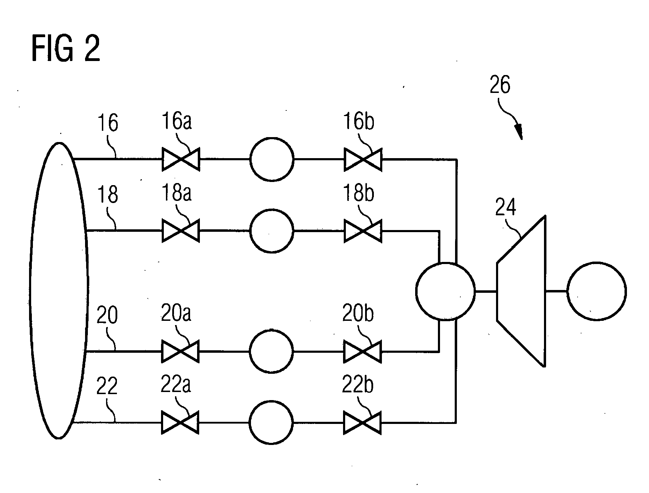

In Fig. 1 und 2 ist ein Teil eines Kernkraftwerks veranschaulicht, bei dem mit einem Dampferzeuger 14 Frischdampf erzeugt wird. Der Frischdampf wird durch vier parallele Rohrleitungen 16, 18, 20 und 22 geführt. In diesen vier Rohrleitungen 16, 18, 20 und 22 ist je eine Paarung aus einem Schnellschlussventil 16a, 18a, 20a bzw. 22a und einem Regel- bzw. Stellventil 16b, 18b, 20b bzw. 22b geschaltet.

Die vier Rohrleitungen 16, 18, 20 und 22 sind nachfolgend gebündelt und zu einem doppelflutigen Hochdruckteil 24 einer Turbine 26 geführt. Die Turbine 26 treibt einen Generator 28.

Bei dem Hochdruckteil 24 der Turbine 26 handelt es sich vorwiegend um eine Sattdampfturbine.

Nach Durchströmen des Hochdruckteils 24 beträgt der Dampfdruck noch ca. 10 bar. Der Wasseranteil des Dampfes ist derart hoch, dass Zwischenüberhitzer 30 nachgeschaltet sind. Diese erhitzen den Dampf, bevor er in drei Niederdruckteile 32 der Turbine 26 eingeleitet wird.

Die Schnellschlussventile 16a, 18a, 20a und 22a unterbrechen im Anforderungsfall bzw. bei Störungen an den Stellventilen 16b, 18b, 20b bzw. 22b als Mehrfach-Schutzarmatur die Dampfzufuhr zur Turbine 26. Dabei schließen die Schnellschlussventile 16a, 18a, 20a und 22a in Kombination oder einzeln. Mit dem Schließvorgang steigt der Druck in der zugehörigen Rohrleitung 16, 18, 20 bzw. 22, wobei sich erhebliche Kräfte entwickeln.

Bei einer hier besonders relevanten Art von Störfall driftet im Teillastbetrieb des Kernkraftwerks 10 ein einzelnes Stellventil auf - im hier betrachteten Beispielfall sei dies das Stellventil 16b - während aufgrund des sich dadurch ergebenden großen Massenstroms am Hochdruckteil 24 die restlichen Stellventile 18b, 20b und 22b von einer zugehörigen Steuerung zugefahren werden.

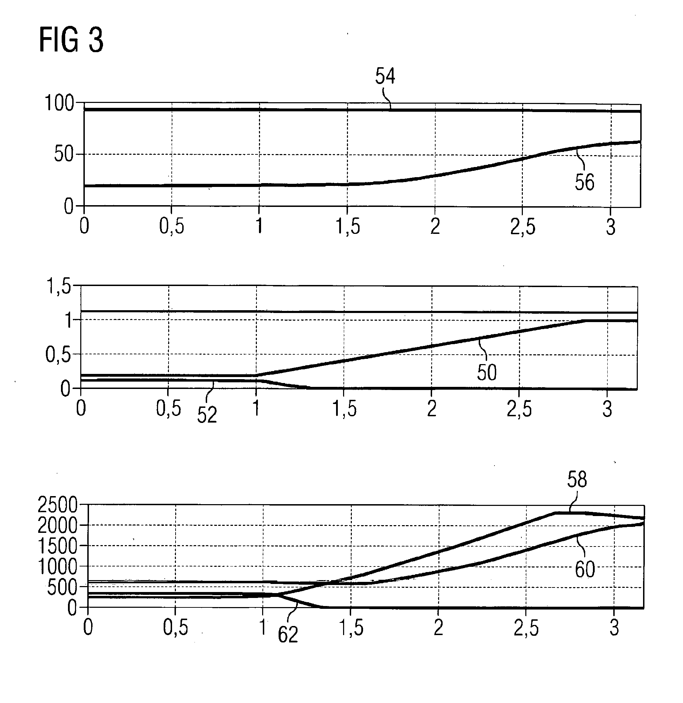

Der Vorgang ist in Fig. 3 veranschaulicht, wobei eine Linie 50 den Ventilhub bzw. die Bewegung des Stellventils 16b über der Zeit von der Stellung etwas über 0 (Geschlossen) zur Stellung 1 (Offen) zeigt, während die Stellventile 18b, 20b und 22b gemäß einer Linie 52 in die Geschlossen-Stellung 0 geregelt werden.

Es ergibt sich dabei ausgehend von einem Druck von ca. 90 bar vor der Mehrfach-Armatur (Linie 54) vor dem Hochdruckteil 24 ein ansteigender Druck gemäß der Linie 56 sowie ein Massenstrom durch das sich öffnende Stellventil 16b von bis zu ca. 2300 kg/s gemäß der Linie 58. Dieser Massenstrom führt im Hochdruckteil 24 selbst zu einem Massenstrom von bis zu ca. 2100 kg/s (Linie 60). Zugleich sinkt der Massenstrom durch die restlichen Stellventile 18b, 20b und 22b gegen Null (Linie 62)

Damit sich derart hohe Massenströme im Hochdruckteil 24 nicht einstellen, ist vorgesehen, dass die aus den Ventilen 16a bis 22a sowie 16b bis 22b gebildete Mehrfach-Armatur im Hinblick auf mögliche Störfälle überwacht wird. Dabei wird insbesondere eine Antivalenzprüfung an der Mehrfach-Armatur vorgenommen. Als zu prüfende physikalische Größe wird der Ventilhub der Stellventile 16b bis 22 b verwendet, wie er im Diagramm in der Mitte der Fig. 3 veranschaulicht ist.

Die Antivalenzprüfung zielt dabei darauf ab, ob genau eine von zwei Aussagen wahr ist bzw. ob beide durch sie verbundenen Aussagen unterschiedlich sind. Mit anderen Worten ermittelt sie, ob entweder die eine oder die andere Aussage wahr ist, aber nicht beide gleichzeitig wahr oder beide gleichzeitig falsch sind. Als Aussage dienen die Ventilhübe der einzelnen Stellventile, so dass mittels der Antivalenzprüfung eine Abweichung im Gang bzw. Hub der einzelnen Ventile relativ zueinander festgestellt werden kann. Die Prüfung schlägt an, wenn eine Abweichung von mehr als 25% des möglichen Gesamthubes zwischen einzelnen Ventilpaaren ermittelt wird.

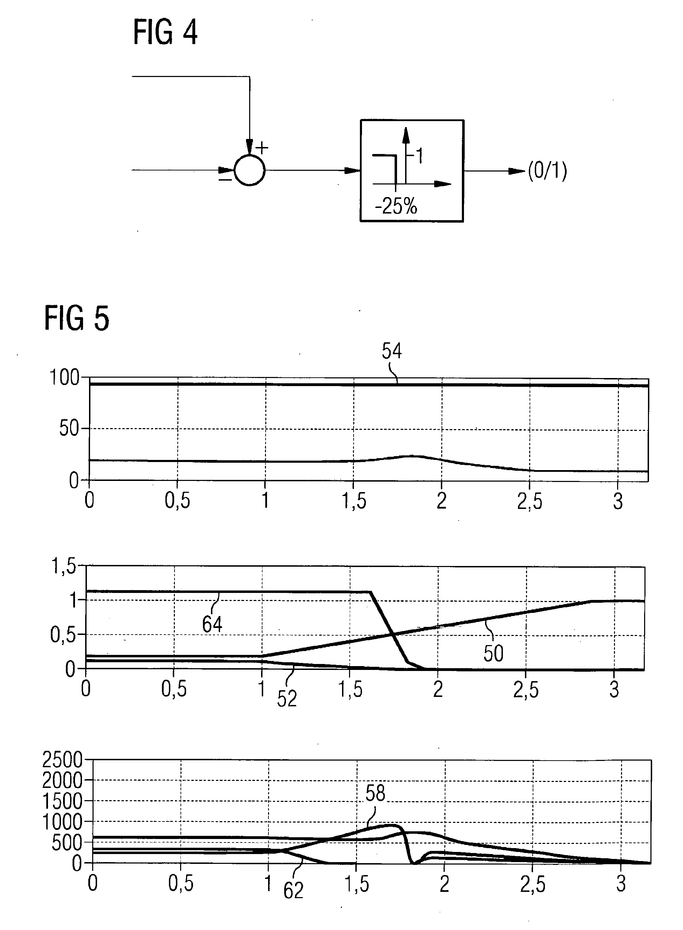

Es werden also die Ventilhübe der Stellventile 16b bis 22b miteinander verglichen und es wird erkannt, ob einer der Ventilhübe mehr als 25% von den anderen abweicht (siehe Fig. 4). Wenn eine derartige Abweichung erkannt wird, wird ein Signal 1 erzeugt, mit dem eine Gegenmaßnahme eingeleitet wird.

Als Gegenmaßnahme wird das Schnellschlussventil 16a oder das Stellventil 16b geschlossen (siehe Linie 64) Das schnelle Schießen dieses Ventils führt zu einer Verringerung des Massenstroms durch das zugehörige Stellventil 16b bzw. Schnellschlussventil 16a gemäß der Linie 58 in Fig. 5. Zugleich reduziert sich der Massenstrom durch den Hochdruckteil 24 gemäß der Linie 60 der Fig. 5.

## Patentansprüche

1. Verfahren zum Überwachen einer schnellschließenden Mehrfach-Armatur mit mehreren Ventilen (16a-22a, 16b-22b), insbesondere eines Kernkraftwerks, mit den Schritten:
Zuführen von Dampf zu der schnellschließenden Mehrfach-Armatur (16a-22a, 16b-22b) unter bestimmten Betriebszuständen,
Verstellen der mehreren Ventile der Mehrfach-Armatur (16a-22a, 16b-22b) in Abhängigkeit von Steuergrößen und
Überwachen der Mehrfach-Armatur (16a-22a, 16b-22b) im Hinblick auf mögliche Störfälle,
bei dem beim Überwachen der Mehrfach-Armatur (16a-22a, 16b-22b) auf mögliche Störfälle der Wert mindestens einer physikalischen Größe je Ventil ermittelt wird und
die ermittelten Werte der physikalischen Größen auf Antivalenz überprüft werden,
Einleiten einer Gegenmaßnahme, sobald ein Störfall erkannt wird,
wobei zumindest ein Ventil (16a-22a, 16b-22b) geschlossen wird.

2. Verfahren nach Anspruch 1,
bei dem das Überprüfen auf Antivalenz während des Betriebszustands der Teillast erfolgt und als Störfall ein Aufdriften oder ein Verbleiben in Offen-Stellung eines Ventils (16a) erkannt wird, während die restlichen Ventile (18a-22a) zufahren oder in Geschlossen-Stellung verbleiben (Fig. 3).

3. Verfahren nach Anspruch 1 oder 2,
bei dem das Überprüfen auf Antivalenz während des Betriebszustands der Volllast erfolgt und als Störfall ein Verbleiben in Offen-Stellung eines Ventils (18a-22a) erkannt wird, während die restlichen Ventile im Schnellgang oder geregelt zufahren.

4. Verfahren nach einem der Ansprüche 1 bis 3,
bei dem beim Verstellen der Ventile (16a-22a) mit diesen je ein Massenstrom in einer Rohrleitung (16-22) eingestellt wird und das Ermitteln des Wertes einer physikalischen Größe ein Ermitteln des Massenstroms je Rohrleitung (16-22) umfasst.

5. Verfahren nach Anspruch 4,
bei dem das Ermitteln des Massenstroms je Rohrleitung (16-22) durch ein Messen des Massenstroms in der zugehörigen Rohrleitung (16-22) erfolgt.

6. Verfahren nach Anspruch 4,
bei dem das Ermitteln des Massenstroms je Rohrleitung (16-22) durch ein Ermitteln des Ventilhubs des zugehörigen Ventils (16a-22a) und ein nachfolgendes Umrechnen dieses Ventilhubs in einen resultierenden Massenstrom erfolgt.

7. Verfahren nach einem der Ansprüche 1 bis 3,
bei dem das Ermitteln des Wertes der physikalischen Größe ein Messen des Ventilhubs je Ventil (16a-22a) umfasst.

8. Verfahren nach einem der Ansprüche 1 bis 7,
bei dem ein Störfall erkannt wird, wenn beim Überprüfen der ermittelten Werte der physikalischen Größen auf Antivalenz eine Abweichung zwischen den Werten von mehr als 25% erkannt wird (Fig. 4 und 5).

9. Verfahren nach Anspruch 8,
bei dem bei Erkennung eines Störfalls ein Schnellgang des fehlerhaften Ventils (16a; 16b), ein Teilschnellschluss des betreffenden Strangs oder ein vollständiger Trip einer nachgeordneten Turbine (26) ausgelöst wird.

10. Vorrichtung zum Überwachen einer schnellschließenden Mehrfach-Armatur mit mehreren Ventilen (16a-22a, 16b-22b), insbesondere eines Kernkraftwerks, mit:
einem Mittel zum Zuführen von Dampf zu der schnellschließenden Mehrfach-Armatur (16a-22a, 16b-22b) unter bestimmten Betriebszuständen,
einem Mittel zum Verstellen der mehreren Ventile der Mehrfach-Armatur (16a-22a, 16b-22b) in Abhängigkeit von Steuergrößen und
einem Mittel zum Überwachen der Mehrfach-Armatur (16a-22a, 16b-22b) im Hinblick auf mögliche Störfälle,
bei dem das Mittel zum Überwachen der Mehrfach-Armatur (16a-22a, 16b-22b) auf mögliche Störfälle dazu eingerichtet ist, den Wert mindestens einer physikalischen Größe je Ventil (16a-22a, 16b-22b) zu ermittelt und
die ermittelten Werte der physikalischen Größen auf Antivalenz zu überprüfen,
wobei im Störfall eine Gegenmaßnahme eingeleitet wird und zumindest ein Ventil (16a-22a, 16b-22b) geschlossen wird.

## Claims

1. Method for monitoring a quick-closing multiple fitting with a plurality of valves (16a-22a, 16b-22b), in particular of a nuclear power plant, involving the steps of:
feeding steam to the quick-closing multiple fitting (16a-22a, 16b-22b) under certain operating states,
adjusting the plurality of valves of the multiple fitting (16a-22a, 16b-22b) in dependence on actuating variables and
monitoring the multiple fitting (16a-22a, 16b-22b) with regard to possible faults,
in which, when monitoring the multiple fitting (16a-22a, 16b-22b) for possible faults, the value of at least one physical variable of each valve is determined and the determined values of the physical variables are checked for anti-valence,
initiating a countermeasure as soon as a fault is detected,
wherein at least one valve (16a-22a, 16b-22b) is closed.

2. Method according to Claim 1,
in which the checking for anti-valence takes place during the part-load operating state and it is detected as a fault if a valve (16a) drifts open or remains open while the other valves (18a-22a) are closing or remain in the closed position (Figure 3).

3. Method according to Claim 1 or 2,
in which the checking for anti-valence takes place during the full-load operating state and it is detected as a fault if a valve (18a-22a) remains in the open position while the other valves are closing in fast mode or as a controlled response.

4. Method according to one of Claims 1 to 3,
in which the adjustment of the valves (16a-22a) is accompanied by these valves each setting a mass flow in a pipeline (16-22) and the determination of the value of a physical variable comprising a determination of the mass flow of each pipeline (16-22).

5. Method according to Claim 4,
in which the determination of the mass flow of each pipeline (16-22) takes place by measuring the mass flow in the associated pipeline (16-22).

6. Method according to Claim 4,
in which the determination of the mass flow of each pipeline (16-22) takes place by determining the valve travel of the associated valve (16a-22a) and a subsequent conversion of this valve travel into a resultant mass flow.

7. Method according to one of Claims 1 to 3,
in which the determination of the value of the physical variable comprises measuring the valve travel of each valve (16a-22a).

8. Method according to one of Claims 1 to 7,
in which a fault is detected if, when checking the determined values of the physical variables for anti-valence, a deviation between the values of more than 25% is detected (Figures 4 and 5).

9. Method according to Claim 8,
in which a fast mode of the defective valve (16a; 16b), a partial quick closure of the section concerned or a complete trip of a downstream turbine (26) is triggered if a fault is detected.

10. Device for monitoring a quick-closing multiple fitting with a plurality of valves (16a-22a, 16b-22b), in particular of a nuclear power plant, comprising:
a means for feeding steam to the quick-closing multiple fitting (16a-22a, 16b-22b) under certain operating states,
a means for adjusting the plurality of valves of the multiple fitting (16a-22a, 16b-22b) in dependence on actuating variables and
a means for monitoring the multiple fitting (16a-22a, 16b-22b) with regard to possible faults,
in which the means for monitoring the multiple fitting (16a-22a, 16b-22b) for possible faults is set up for determining the value of at least one physical variable of each valve (16a-22a, 16b-22b) and
for checking the determined values of the physical variables for anti-valence,
wherein, in the event of a fault, a countermeasure is initiated and at least one valve (16a-22a, 16b-22b) is closed.

## Revendications

1. Procédé de contrôle d'une robinetterie multiple à fermeture rapide ayant plusieurs soupapes (16a à 22a, 16b à 22b), notamment d'une centrale nucléaire, comprenant les stades :
envoi de vapeur à la robinetterie (16a à 22a, 16b à 22b) multiple à fermeture rapide dans des états de fonctionnement déterminés,
réglage des plusieurs soupapes de la robinetterie (16a à 22a,
16b à 22b) multiple, en fonction de grandeurs de commande et
contrôle de la robinetterie (16a à 22a, 16b à 22b) multiple en ce qui concerne la possibilité de panne,
dans lequel, lors du contrôle de la robinetterie (16a à 22a,
16b à 22b) multiple sur la possibilité de panne, on détermine la valeur d'au moins une grandeur physique par soupape et
on contrôle le OU exclusif des valeurs déterminées des grandeurs physiques,
on prend une contre-mesure dès qu'une panne est détectée,
au moins une soupape (16a à 22a, 16b à 22b) étant fermée.

2. Procédé suivant la revendication 1,
dans lequel on contrôle le OU exclusif pendant l'état de fonctionnement de la charge partielle et on détecte, comme panne, le fait qu'une soupape (16a) s'ouvre ou reste dans la position ouverte, tandis que les autres soupapes (18a à 22a) se ferment ou restent dans la position fermée (figure 3).

3. Procédé suivant la revendication 1 ou 2,
dans lequel on contrôle le OU exclusif pendant l'état de fonctionnement de la pleine charge et on détecte, comme panne, le fait qu'une soupape (18a à 22a) reste dans la position ouverte tandis que les autres soupapes se ferment rapidement d'une manière régulée.

4. Procédé suivant l'une des revendications 1 à 3,
dans lequel, lors du réglage des soupapes (16a à 22a), on règle par celles-ci et respectivement un courant massique dans une canalisation (16 à 22) et la détermination de la valeur d'une grandeur physique comprend une détermination du courant massique par canalisation (16 à 22).

5. Procédé suivant la revendication 4,
dans lequel on effectue la détermination du courant massique par canalisation (16 à 22) par une mesure du courant massique dans la canalisation (16 à 22) associée.

6. Procédé suivant la revendication 4,
dans lequel on effectue la détermination du courant massique par canalisation (16 à 22) par une détermination de la course de la soupape (16a à 22a) associée et par un recalcul venant ensuite de cette course de la soupape en un courant massique résultant.

7. Procédé suivant l'une des revendications 1 à 3,
dans lequel on effectue une mesure de la levée de soupape par soupape (16a à 22a).

8. Procédé suivant l'une des revendications 1 à 7,
dans lequel on détecte une panne si, lors du contrôle du OU exclusif des valeurs déterminées des grandeurs physiques, on détecte un écart entre les valeurs de plus de 25% (figures 4 et 5).

9. Procédé suivant la revendication 8,
dans lequel, si l'on détecte une panne, on déclenche une marche rapide de la soupape (16a ; 16b) défectueuse, un arrêt rapide de la ligne concernée ou un trip complet d'une turbine (26) en aval.

10. Dispositif de contrôle d'une robinetterie multiple à fermeture rapide ayant plusieurs soupapes (16a à 22a, 16b à 22b), notamment d'une centrale nucléaire, comprenant :
un moyen d'apport de vapeur à la robinetterie (16a à 22a, 16b à 22b) multiple à fermeture rapide dans des états de fonctionnement déterminés,
un moyen de réglage des plusieurs soupapes de la robinetterie (16a à 22a, 16b à 22b) multiple en fonction de grandeurs de commande et
un moyen de contrôle de la possibilité de panne de la robinetterie (16a à 22a, 16b à 22b) multiple,
dans lequel le moyen de contrôle de la possibilité de panne de la robinetterie (16a à 22a, 16b à 22b) multiple est agencé pour déterminer la valeur d'au moins une grandeur physique par soupape (16a à 22a, 16b à 22b) multiple et
de contrôler le OU exclusif des valeurs déterminées des grandeurs physiques,
dans lequel, en cas de panne, on prend une contre-mesure et on ferme au moins une soupape (16a à 22a, 16b à 22b).
